# NEW EUROPEAN PATENT SPECIFICATION

(11) **EP 0 852 544 B2**
(45) Date of publication and mention of the opposition decision: **07.01.2004**
(45) Mention of the grant of the patent: 24.11.1999
(21) Application number: 96933851.6
(22) Date of filing: 23.09.1996
(51) Int. Cl.: B60K 17/356

(54) **A SOIL COMPACTOR AND TRACTION CONTROL SYSTEM THEREON**
VERDICHTUNGSGERÄT MIT ZUGKRAFTSTEUERUNGSSYSTEM
COMPACTEUR DE SOL ET SON SYSTEME DE COMMANDE DE TRACTION

(30) Priority: 29.09.1995 US 537181
(43) Date of publication of application: 15.07.1998
(73) Proprietor: INGERSOLL-RAND COMPANY, Woodcliff Lake New Jersey 07675-8738 (US); SAUER-DANFOSS INC., Ames, Iowa 50010 (US)
(72) Inventor: YATES, Steve, K., Scotland, PA 17254 (US); MAGALSKI, Edward, D., York, PA 17404 (US); Williams, Keith, Minnetonka, MN 55345 (US)
(74) Representative: Feakins, Graham Allan
(86) International application number: PCT/US1996/015171
(87) International publication number: WO 1997/011858

(56) References cited:
- EP-A- 0 226 844
- EP-A- 0 505 254
- DE-U- 8 623 590
- FR-A- 2 651 729
- US-A- 4 260 280
- US-A- 4 399 886
- US-A- 4 402 377
- US-A- 5 043 896
- US-A- 5 201 570
- DE-Z "Ölhydraulik und Pneumatik", Nr. 4/1992, S.206 bis 221
- Mannesmann Rexroth (Hrsg.): Fachtagung "Mobilhydraulik und -elektronik", 6. und 7. Oktober 1988, darin: N. Rückgauer "Hydraulische Fahrantriebe für Radfahrzeuge" und W. Walzer: "Elektronische Steuerungen und Regelungen für hydrostatische Antriebe"

## Description

This invention relates generally to mobile earth compactors, and more particularly to traction control systems in compactors.

Prior art soil compactors have a closed loop, parallel circuit traction system which consists of an axle with tyres and in the rear of the unit and a steel drum that drives in the front. The axle is driven by a high speed hydraulic motor fitted into the axle's differential housing. The axle contains a no-spin differential that restricts one tyre from spinning out and disabling power to the other; both tyres will attempt to drive the compactor. The drum is driven by either a gear box with a high speed low torque hydraulic motor input or a low speed high torque hydraulic motor. In this system, if either the tyres or the drum spin because of loss of sufficient friction to the ground the other driving element basically becomes non-driving because all the hydraulic pump flow is directed to the spinning element, taking the path of least resistance. When this happens the hydraulic pressure in the system is also reduced further limiting the machine's capability.

Presently the system used to counter this problem on high grades is a traction valve or hydraulic flow divider/combiner. This component splits the flow from or returning to the hydraulic pump into front and rear flows where each flow is directed to the particular driving element in order to power it, therefore keeping full pump flow from going to a single spinning element. The problem with this type of system is the heat generated in it due to the valving internal in the component as well as the method of control; that being pressure drop in the system loop between the front and rear element circuits. Also some flow divider systems are only engaged when the operator operates a switch, in these cases the wheels or drum have usually displaced some amount of soil which will in turn increase the effective grade the machine is attempting to climb. Therefore this delay in operation versus functional need is also a disadvantage to this system.

US-A-4 402 377 discloses a soil compactor in accordance with the preamble of claim 1.

According to the present invention, there is provided a soil compactor comprising:
a) tractor means for supporting a rear portion of said compactor, said tractor means being mounted on a pair of tyres rotatably connected to a first transverse axle;
b) drum means for compacting material having a rotatable drum mounted on a second transverse axle parallel to said first axle, said drum means connected to said tractor means; and
c) a closed loop, parallel hydraulic circuit means for propelling said compactor, said hydraulic circuit means comprising:
   i) first hydraulic motor means for rotating said tyres, said first motor means including an electronic torque control means for varying the torque applied by said first motor means;
   ii) second hydraulic motor means for rotating said drum, said second motor means including an electronic torque control means for varying the torque applied by said second hydraulic motor means; characterised by:
      traction control means comprising means for sensing the rotational speed of said first and second hydraulic motor means and microcontroller means for controlling said hydraulic circuit means to selectively and independently vary the torque of each of said first and second hydraulic motors, whereby the tyre rotation speed and the drum rotation speed are controlled to within a predetermined ratio of each other; and
      slope sensing means for sensing when said compactor is positioned on a slope wherein said drum is elevated above said tyres, and vice versa; and means for generating a first electrical signal to indicate when said drum is elevated above said tyres, and a second electrical signal to indicate when said drum is lower than said tyres, and said microcontroller means being electrically connected to said slope sensing means responsive to said first and second electrical signals, for selectively varying the torque of each of said first and second hydraulic motor means, whereby the torque applied by said first motor means is reduced to a predetermined amount so as to control tyre rotational speed, to permit said tyres to maintain contact with a sloped surface, and the torque applied by said second motor means is adjusted to maintain said drum speed and tyre speed within a predetermined ratio of each other.
For a better understanding of the invention and to show how the same may be carried into effect, reference will now be made, by way of example to the accompanying drawings, in which:
Fig. 1 is a schematic side view, partially in cross-section, of a soil compactor;
Fig. 2 is a schematic plan view, partially in cross-section, of the compactor;

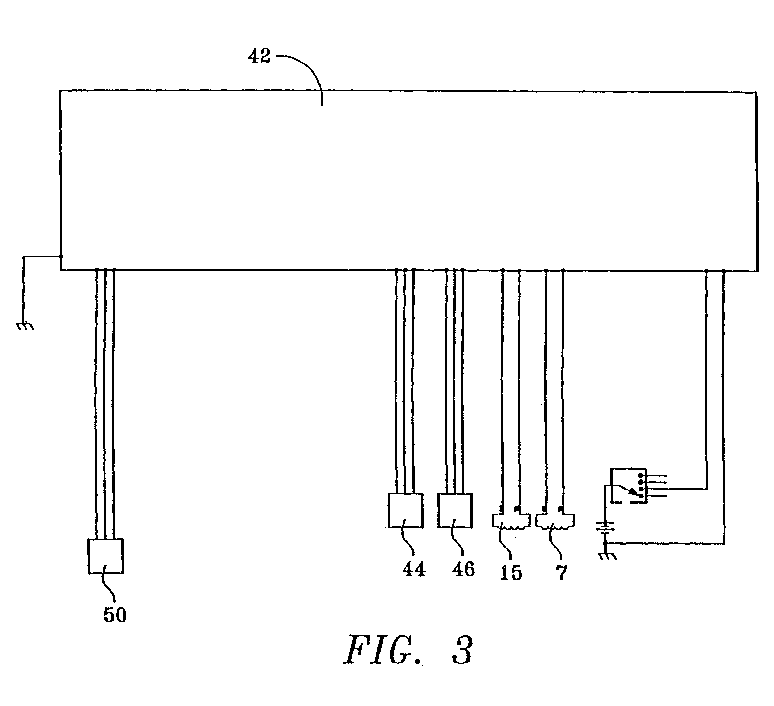

Fig. 3 is a schematic electrical circuit; and
Fig. 4 is a schematic hydraulic circuit of a closed loop parallel circuit traction system.

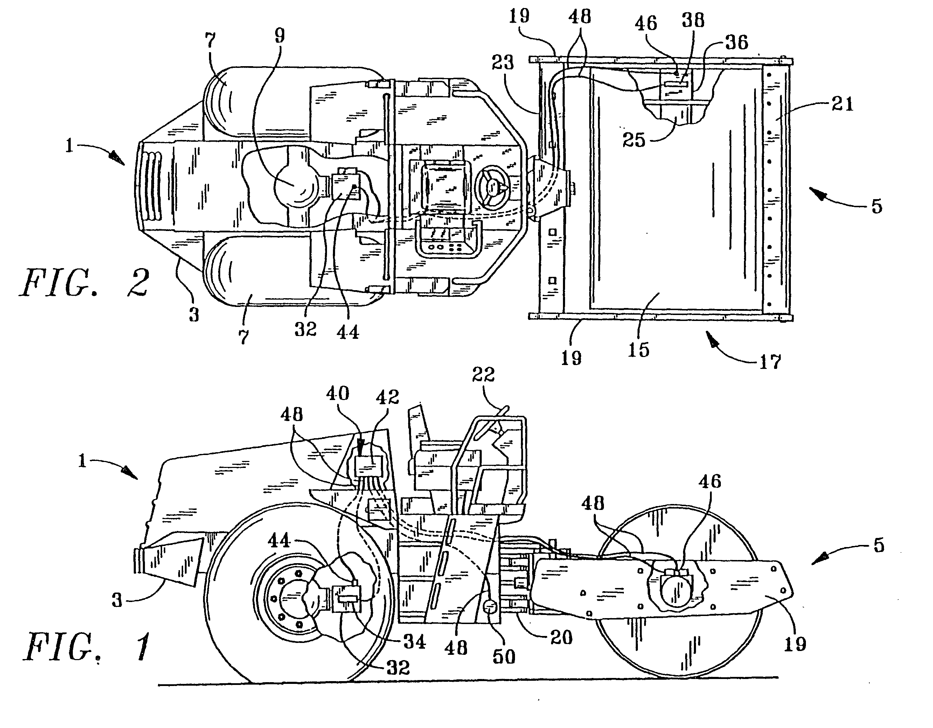

Figs. 1 and 2 show an earth compactor 1 which can be of the vibratory type or of the non-vibratory type. The compactor 1 includes a rear tractor portion 3 and a front drum portion 5. The rear tractor portion 3 is mounted on a pair of rotatable pneumatic tyres 7 that are interconnected to each other by a first transverse axle 9, as is conventional. The drum portion 5 includes a planar, rotatable steel for compacting material. The drum 15 is mounted on a drum frame 17 formed by a pair of parallel side frame members 19 connected to a pair of parallel front and rear members 21, 23 respectively. The drum 15 is mounted for rotation on a second transverse axle 25 that is parallel to first axle 9, as is conventional. The drum 17 is connected to tractor portion 3, in this case by a conventional articulated joint 20. The articulated joint 20 is used to steer the compactor 1 in response to an operator manipulated steering wheel 22, as is well known. The articulated joint 20 is optional, since the compactor in the present case will work with a drum portion 5 and tractor portion 3 that are rigidly connected.

Carried on the compactor 1 is a closed loop, parallel hydraulic circuit means, described hereinafter, for propelling the compactor 1. The hydraulic circuit means includes first hydraulic motor 32 for rotating the tyres 7. The first motor 32 includes a conventional electronic torque control means 34 (Fig. 1) for varying the torque applied by the motor 32. The motor 32 can control torque by varying the hydraulic displacement of the motor 32 by manipulating a "swash plate" within the motor 32. Alternatively, a motor can be used that controls torque by manipulating a hydraulic pressure within the motor. Varying the torque applied by the motor 32 varies the rotational speed of the tyres 7, as is well known.

The hydraulic circuit means further includes a second hydraulic motor 36 for rotating the drum 15. The second motor 36 includes a conventional electronic torque control means 38 for varying the torque applied by the motor 36. The motor 36 can control torque by varying the hydraulic displacement of the motor 36 by manipulating a "swash plate" within the motor 36. Alternatively, a motor can be used that controls torque by manipulating hydraulic pressure within the motor. Varying the torque applied by the motor 36 varies the rotational speed of the drum 15, as is well known.

The hydraulic circuit means further includes a traction control means 40 (Fig. 1) that controls the hydraulic circuit means selectively and independently to vary the speed of the motors 32, 36, whereby the tyre rotational speed and drum rotational speed are maintained within a predetermined ratio of each other.

A five percent slippage rate against the fixed ratio of driving elements is preferred. However, this ratio can vary somewhat, depending upon the machine, the type of material being compacted and the specifications of the motors 32, 36. A traction control means 40 permits this ratio to be input into a microcontroller 42, described hereinafter, to customise the performance of the compactor 1.

The traction control means 40 makes use of a first speed sensing means 44 of the motor 32, that is conventionally provided with the motor 32. The traction control means 40 also makes use of a second speed sensing means 46 of the motor 36, that is conventionally provided with the motor 36.

The speed sensing means 44 of the motor 32 senses the rotational speed of the motor 32 and generates a first electrical signal proportional thereto. The speed sensing means 46 of the motor 36 senses the rotational speed of the motor 36 and generates a second electrical signal proportional thereto.

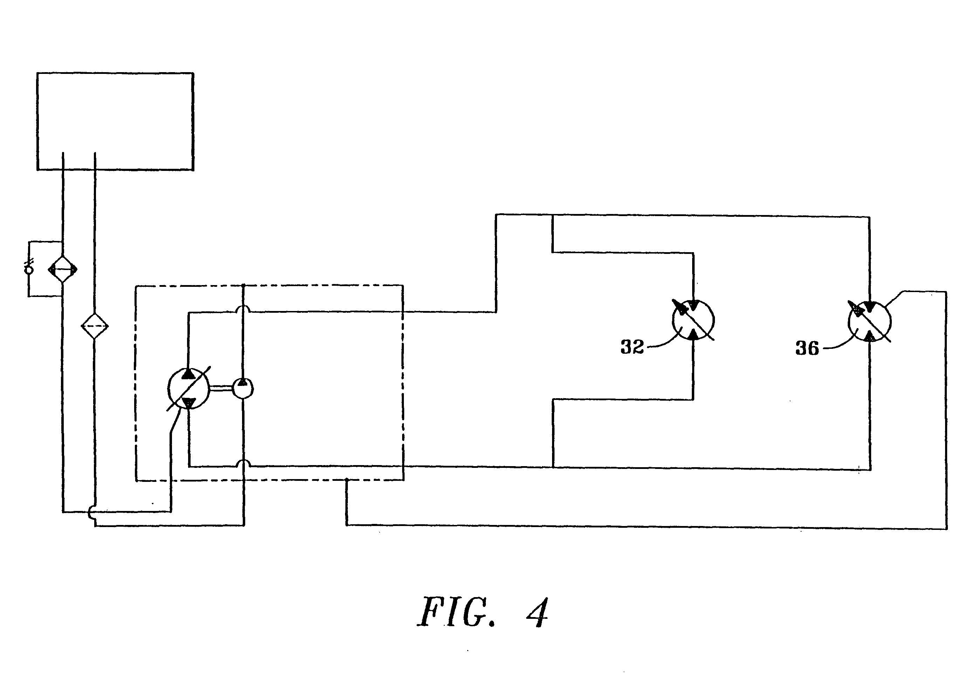

The microcontroller 42 is electronically connected (schematically shown as 48 in Fig. 1 and Fig. 4) to the speed sensing means of the motors 32, 36 and is responsive to first and second electrical signals therefrom. The microcontroller 42 receives first and second electrical signals indicative of the speed of the motors 32, 36 and compares the two. When both the tyres and the drum are experiencing traction, the speed of the motors 32, 36 is at the preselected ratio, and microcontroller does not cause any action to take place on the motors 32, 36.

As is well known for a parallel, closed loop hydraulic circuit for compactors, when either the tyres or the drum are slipping, the speed of the slipping member increases. The microcontroller 42 detects that the ratio is out of the preselected range, and immediately lowers the torque applied by the motors 32, 36 to the slipping member until the ratio comes back into range.

The earth compactor also includes a ground slope sensing means 50 (Fig. 1), to counteract a condition known as "tyre hop". Tyre hop occurs when the compactor 1 is positioned on a slope wherein the tyres 7 are elevated above the drum 15. When the compactor 1 moves up slope in this orientation, the tyres 7 experience bouncing and intermittent slippage, owing to the light weight on them. Tyre hop does not occur when the compactor 1 is going down slope, or when the drum 15 is elevated with respect to the tyres 7.

The slope sensing means 50 generates a third electrical signal to indicate when tyres 7 are elevated above the drum 15. The microcontroller 42, being electronically connected to the slope sensing means 50, is responsive to the third electrical signal. The microcontroller 42 sends a signal to the motor 32 to lower the torque applied to tyres 7 by the motor 32 immediately, thereby lowering the speed of the tyres 7, which causes the preselected ratio of speeds between the tyres 7 and drum 15 to go out of range. Immediately, the microcontroller 42 sends a signal to the motor 36 to lower the torque applied to drum 15 by the motor 36 immediately, thereby lowering the speed of the drum 15, which causes the preselected ratio of speeds between the tyres 7 and drum 15 to come back into range.

In operation, the traction drive control system 40 is used that will maximise the traction capabilities of the machine regardless of ground conditions by monitoring and adjusting the tractive effort of each driving element to match ground conditions. This is done by monitoring the front and rear driving elements 7, 15, respectively, and when slipping is detected the control system 40 would reduce the torque being generated at that element while enabling the other element to continue driving with the first element driving at what ever tractive effort can be transmitted to the ground without spinout.

The speed sensing system 44, 46 would monitor the relative speed of the front and rear driving elements 7, and 15, respectively, and would sense when one of those elements first begins to slip. At this point the control system 40 would reduce the motor displacement or hydraulic pressure, thereby reducing the driving torque at that element to the point just prior to slipping, thus maximising the tractive effort of this element. The reaction time that this occurs is important so the element does not spinout and dig a hole which would be more difficult to climb than the grade prior to spinning.

This concept will work if the tyres 7 are replaced by a second drum 15.

For a microcontroller 42, a microcontroller supplied by Sauer Sundstrand Company, under the designation "DC2 Microcontroller" described in booklet BLN 95-9041-3, March 1993, is preferred.

For the motors 32, 36, motors are preferred that are supplied by Sauer Sundstrand Company under the designation "Series 51 Motors With Electric Displacement Controls and a Hall Effect Speed Pick-Up". For motor 32 the Sauer Sundstrand further designation is: 51-V-060-A-S1-N-EP-A5-J-Y-A6-NNS-015-AA-20-20-00. For motor 36 the Sauer Sundstrand further designation is: 51-V-060-R-D1-C-EP-A5-J-Y-A6-NNS-015-AA-20-20-00.

For the slope sensing means 50, a device supplied by Sauer Sundstrand Company with the Model No. MCX106A is preferred.

## Claims

1. A soil compactor (1) comprising:
a) tractor means (3) for supporting a rear portion of said compactor, said tractor means being mounted on a pair of tyres (7) rotatably connected to a first transverse axle (9),
b) drum means (5) for compacting material having a rotatable drum (15) mounted on a second transverse axle (25) parallel to said first axle (9), said drum means connected to said tractor means; and
c) a closed loop, parallel hydraulic circuit means for propelling said compactor, said hydraulic circuit means comprising:
i) first hydraulic motor means (32) for rotating said tyres (7), said first,motor means including an electronic torque control means (34) for varying the torque applied by said first motor means;
ii) second hydraulic motor means (36) for rotating said drum (15), said second motor means including an electronic torque control means (38) for varying the torque applied by said second hydraulic motor means; **characterised by**
traction control means (40) comprising means (44,46) for sensing the rotational speed of said first and second hydraulic motor means (32,36) and microcontroller means (42) for controlling said hydraulic circuit means to selectively and independently vary the torque of each of said first and second hydraulic motors (32, 36), whereby the type rotation speed and the drum rotation speed are controlled to within a predetermined ratio of each other; and
slope sensing means (50) for sensing when said compactor is positioned on a slope wherein said drum (15) is elevated above said tyres (7), and vice versa; and means for generating a first electrical signal to indicate when said drum is elevated above said tyres, and a second electrical signal to indicate when said drum is lower than said tyres, and said microcontroller means (42) being electrically connected to said slope sensing means (50) responsive to said first and second electrical signals, for selectively varying the torque of each of said first and second hydraulic motor means, whereby the torque applied by said first motor means is reduced to a predetermined amount so as to control tyre rotational speed, to permit said tyres to maintain contact with a sloped surface, and the torque applied by said second motor means is adjusted to maintain said drum speed and tyre speed within a predetermined ratio of each other.

2. A compactor according to claim 1, wherein said traction control means comprises:
a) a first speed sensing means (44) for sending the rotational speed of said first hydraulic motor means (32) and generating a third electrical signal proportional thereto;
b) a second speed sensing means (46) for sensing the rotational speed of said second hydraulic motor means (36) and generating a fourth electrical signal proportional thereto; and
c) said microcontroller means (42) electrically connected to said first and second speed sensing means (44, 46), responsive to said third and fourth electrical signals generated by said first and second speed sensing means, respectively, for selectively varying the torque of each of said first and second hydraulic motor means, whereby the tyre rotation speed and the drum rotation speed are controlled to within a predetermined ratio of each other.

3. A compactor according to claim 1 or 2, wherein said predetermined ratio is fixed with a 5 percent slippage rate.

4. A compactor according to claim 1, 2 or 3, wherein said electronic torque control means (34) on said first and second motor means (32, 36) each includes means for varying motor hydraulic displacement to vary torque.

5. A compactor according to any one of the preceding claims, wherein said electronic torque control means (34) on said first and second motor means (32, 36) each includes means for varying motor hydraulic pressure to vary torque.

6. A compactor according to any one of the preceding claims, wherein said drum means (5) is connected to said tractor means (3) through an articulated joint (20).

## Patentansprüche

1. Bodenverdichter (1) mit
a) einer Antriebseinrichtung (3) zum Tragen eines hinteren Abschnitts des Verdichters, wobei die Antriebseinrichtung auf einem Paar Reifen (7), die mit einer ersten Querachse (9) drehbar verbunden sind, befestigt ist,
b) einer Trommeleinrichtung (5) zum Verdichten von Material, mit einer drehbaren Trommel (15), die auf einer zweiten, zur ersten Achse (9) parallel verlaufenden Querachse (25) befestigt ist, wobei die Trommeleinrichtung mit der Antriebseinrichtung verbunden ist, und
c) einer geschlossenen parallelen Hydraulikschalteinrichtung zum Antreiben des Verdichters, wobei die Hydraulikschalteinrichtung folgende Einrichtungen aufweist:
i) eine erste hydraulische Motoreinrichtung (32) zum Drehen der Reifen (7), wobei die erste Motoreinrichtung eine elektronische Drehmomentsteuereinrichtung (34) zum Variieren des durch die erste Motoreinrichtung aufgebrachten Drehmoments aufweist,
ii) eine zweite hydraulische Motoreinrichtung (36) zum Drehen der Trommel (15), wobei die zweite Motoreinrichtung eine elektronische Drehmomentsteuereinrichtung (38) zum Variieren des durch die zweite hydraulische Motoreinrichtung aufgebrachten Drehmoments aufweist, **gekennzeichnet durch**
eine Traktionssteuereinrichtung (40) mit Einrichtungen (44, 46) zum Feststellen der Drehgeschwindigkeit der ersten und zweiten hydraulischen Motoreinrichtungen (32, 36) und mit einer Mikroprozessoreinrichtung (42) zum Steuern der Hydraulikschaltungseinrichtungen, um wahlweise und unabhängig das Drehmoment jedes der ersten und zweiten Hydraulikmotoren (32, 36) zu verstellen, wodurch die Reifendrehgeschwindigkeit und die Trommeldrehgeschwindigkeit so gesteuert werden, daß sie in einem vorbestimmten Verhältnis zueinander liegen, und **durch**
eine Gefälleabtasteinrichtung (50), um festzustellen, wenn der Verdichter sich auf einem Gefälle befindet, bei dem die Trommel (15) gegenüber den Reifen (7) erhöht ist und umgekehrt, und mit einer Einrichtung zum Erzeugen eines ersten elektrischen Signals, um anzuzeigen, wenn die Trommel gegenüber den Reifen erhöht ist, und eines zweiten elektrischen Signals, um anzuzeigen, wenn die Trommel niedriger liegt als die Reifen, und wobei die Mikroprozessoreinrichtung (42) elektrisch mit der Gefälleabtasteinrichtung (50) verbunden ist, die auf das erste und zweite elektrische Signal reagiert, um wahlweise das Drehmoment jedes der ersten und zweiten Hydraulikmotoreinrichtungen zu variieren, wodurch das von der ersten Motoreinrichtung ausgeübte Drehmoment auf einen vorbestimmten Wert reduziert wird, um die Reifendrehgeschwindigkeit zu steuern, um zu ermöglichen, daß die Reifen mit einer geneigten Oberfläche Kontakt behalten, und wobei das **durch** die zweite Motoreinrichtung aufgebrachte Drehmoment eingestellt wird, um die Trommelgeschwindigkeit und die Reifengeschwindigkeit in einem vorbestimmten Verhältnis zueinander aufrecht zu erhalten.

2. Verdichter nach Anspruch 1, bei dem die Traktionssteuereinrichtung folgende Merkmale aufweist:
a) eine erste Geschwindigkeitsabtasteinrichtung (44) zum Abtasten der Drehgeschwindigkeit der ersten Hydraulikmotoreinrichtung (32) und zum Erzeugen eines dritten dazu proportionalen elektrischen Signals,
b) eine zweite Geschwindigkeitsabtasteinrichtung (46) zum Abtasten der Drehgeschwindigkeit der zweiten Hydraulikmotoreinrichtung (36) und zum Erzeugen eines vierten dazu proportionalen elektrischen Signals, und
c) wobei die Mikroprozessoreinrichtung (42) mit der ersten und der zweiten Geschwindigkeitsabtasteinrichtung (44, 46) elektrisch verbunden ist und auf das dritte und das vierte elektrische Signal reagiert, die durch die ersten und zweiten Geschwindigkeitsabtasteinrichtungen erzeugt werden, um das Drehmoment jedes der ersten und zweiten Hydraulikmotoreinrichtungen wahlweise zu variieren, wodurch die Reifendrehgeschwindigkeit und die Trommeldrehgeschwindigkeit so geregelt werden, daß sie zueinander in einem vorbestimmten Verhältnis liegen.

3. Verdichter nach Anspruch 1 oder 2, wobei das vorbestimmte Verhältnis fest eingestellt ist, mit einem 5%-igen Schlupf.

4. Verdichter nach Anspruch 1, 2 oder 3, bei dem die elektronische Drehmomentsteuereinrichtung (34) der ersten und zweiten Motoreinrichtungen (32, 36) jeweils eine Einrichtung zum Variieren des Hydraulikmotor-Fördervolumens zur Veränderung des Drehmoments aufweist.

5. Verdichter nach einem der vorhergehenden Ansprüche, bei dem die elektronische Drehmomentsteuereinrichtung (34) der ersten und zweiten Motoreinrichtungen (32, 36) jeweils eine Einrichtung zum Variieren des Hydraulikmotor-Druckes zur Veränderung des Drehmoments aufweist.

6. Verdichter nach einem der vorhergehenden Ansprüche, bei dem die Trommeleinrichtung (5) mit der Antriebseinrichtung (3) über eine Gelenkverbindung (20) verbunden ist.

## Revendications

1. Compacteur de sol (1) comportant :
a) des moyens de tracteur (3) destinés à supporter une partie arrière dudit compacteur, lesdits moyens de tracteur étant montés sur une paire de pneumatiques (7) reliés de façon rotative à un premier essieu transversal (9);
b) des moyens de tambour (5) destinés à compacter de la matière ayant un tambour rotatif (15) monté sur un deuxième essieu transversal (25) parallèle au dit premier essieu transversal (9), lesdits moyens de tambour étant reliés aux dits moyens de tracteur; et
c) des moyens de circuit hydraulique en parallèle à boucle fermée destinés à propulser ledit compacteur, lesdits moyens de circuit hydraulique comportant :
i) des premiers moyens de moteur hydraulique (32) destinés à entraîner en rotation lesdits pneumatiques (7), lesdits premiers moyens de moteur comprenant des moyens électroniques de commande de couple (34) destinés à modifier le couple appliqué par lesdits premiers moyens de moteur;
ii) des deuxièmes moyens de moteur hydraulique (36) destinés à entraîner en rotation ledit tambour (15), lesdits deuxièmes moyens de moteur comprenant des moyens électroniques de commande de couple (38) destinés à modifier le couple appliqué par lesdits deuxièmes moyens de moteur hydraulique; **caractérisé par** :
des moyens de commande de traction (40) comportant des moyens (44, 46) destinés à détecter la vitesse de rotation desdits premiers et deuxièmes moyens de moteur hydraulique (32, 36) et des moyens de microcontrôleur (42) destinés à commander lesdits moyens de circuit hydraulique afin de faire varier de manière sélective et indépendante le couple de chacun desdits premier et deuxième moteurs hydrauliques (32, 36), de sorte que la vitesse de rotation de pneumatique et la vitesse de rotation de tambour sont commandées dans un rapport prédéterminé l'une à l'autre; et
des moyens de détection de pente (50) destinés à détecter quand ledit compacteur est positionné sur une pente dans laquelle ledit tambour (15) se trouve plus haut que lesdits pneumatiques (7), vice-versa; et des moyens destinés à générer un premier signal électrique afin d'indiquer quand ledit tambour se trouve plus haut que lesdits pneumatiques, et un deuxième signal électrique destiné à indiquer quand ledit tambour est plus bas que lesdits pneumatiques, et lesdits moyens de microcontrôleur (42) étant électriquement reliés aux dits moyens de détection de pente (50) qui répondent aux dits premier et deuxième signaux électriques, afin de modifier de manière sélective le couple de chacun desdits premiers et deuxièmes moyens de moteur hydraulique, de sorte que le couple appliqué par lesdits premiers moyens de moteur est réduit à une valeur prédéterminée de façon à commander la vitesse de rotation de pneumatique, afin de permettre aux dits pneumatiques de maintenir le contact avec une surface en pente, et le couple appliqué par lesdits deuxièmes moyens de moteur est ajusté afin de maintenir ladite vitesse de tambour et ladite vitesse de pneumatique dans un rapport prédéterminé l'une à l'autre.

2. Compacteur selon la revendication 1, dans lequel lesdits moyens de commande de traction comportent :
a) des premiers moyens de détection de vitesse (44) destinés à détecter la vitesse de rotation desdits premiers moyens de moteur hydraulique (32) et à générer un troisième signal électrique proportionnel à celle-ci;
b) des deuxièmes moyens de détection de vitesse (46) destinés à détecter la vitesse de rotation desdits deuxièmes moyens de moteur hydraulique (36) et à générer un quatrième signal électrique proportionnel à celle-ci; et
c) lesdits moyens de microcontrôleur (42) reliés électriquement aux dits premiers et deuxièmes moyens de détection de vitesse (44, 46), qui répondent aux dits troisième et quatrième signaux électriques générés par lesdits premiers et deuxièmes moyens de détection de vitesse respectivement, afin de modifier de manière sélective le couple de chacun desdits premiers et deuxièmes moyens de moteur hydraulique, de sorte que la vitesse de rotation de pneumatique et la vitesse de rotation de tambour sont commandées dans un rapport prédéterminé l'une à l'autre.

3. Compacteur selon la revendication 1 ou 2, dans lequel ledit rapport prédéterminé est fixé à un rapport de glissement de 5 pour-cent.

4. Compacteur selon la revendication 1, 2 ou 3, dans lequel lesdits moyens électroniques de commande de couple (34) sur lesdits premiers et deuxièmes moyens de moteur (32, 36) comprennent chacun des moyens destinés à modifier le déplacement hydraulique du moteur afin de modifier le couple.

5. Compacteur selon l'une quelconque des revendications précédentes, dans lequel lesdits moyens électroniques de commande de couple (34) sur lesdits premiers et deuxièmes moyens de moteur (32, 36) comprennent chacun des moyens destinés à modifier la pression hydraulique du moteur afin de modifier le couple.

6. Compacteur selon l'une quelconque des revendications précédentes, dans lequel lesdits moyens de tambour (5) sont reliés aux dits moyens de tracteur (3) par l'intermédiaire d'un joint articulé (20).
